# FASCICULE DE BREVET EUROPEEN

(11) **EP 2 146 890 B1**
(45) Date de publication et mention de la délivrance du brevet: **18.04.2012**
(21) Numéro de dépôt: 08762027.4
(22) Date de dépôt: 01.02.2008
(51) Int. Cl.: B62D 25/20, B60N 2/005

(54) **PLANCHER POUR VÉHICULE AUTOMOBILE**
BODEN FÜR EIN MOTORFAHRZEUG
FLOOR FOR MOTOR VEHICLE

(30) Priorité: 02.02.2007 FR 0753032
(43) Date de publication de la demande: 27.01.2010
(73) Titulaire: Inoplast, 07100 Annonay (FR)
(72) Inventeur: MARTIN, Laurent, F-07340 Peaugres (FR); COUDRON, Philippe, F-69300 Caluire & Cuire (FR); CLAUDE, Bruce, F-92000 Nanterre (FR)
(74) Mandataire: Remy, Vincent Noel Paul
(86) Numéro de dépôt international: PCT/FR2008/050167
(87) Numéro de publication internationale: WO 2008/099128

(56) Documents cités:
- EP-A- 0 333 267
- EP-A- 1 609 704
- WO-A-00/40451

## Description

L'invention concerne un plancher pour un véhicule automobile.

Elle s'applique plus particulièrement à un plancher arrière destiné à être disposé à l'intérieur d'une zone destinée à s'étendre sous une rangée de sièges arrière du véhicule automobile.

EP 0 333 267 décrit un plancher pour un véhicule automobile, du type comprenant une première partie réalisée dans un matériau composite comprenant un mélange d'au moins des fibres de renfort et d'une résine polymère, et comprenant une deuxième partie, les première et deuxième parties étant conformées et liées entre elles de manière à constituer un corps creux. Ce document EP est pris à base du préambule de la revendication indépendante 1.

On connaît déjà, dans l'état de la technique, un plancher d'un véhicule automobile, comprenant une partie réalisée dans un matériau composite comprenant un mélange d'au moins des fibres de renfort et d'une résine polymère du type moulé en feuille (SMC).

Par exemple, ce matériau composite du type SMC (acronyme anglais pour "Sheet Moulding Compound") comprend un mélange de fibres de verre et d'une résine polymère thermodurcissable telle que du polyester. Le mélange comprend en général également des charges minérales en relativement grandes proportions afin notamment de limiter la consommation de résine polyester.

Ce plancher est assez rigide pour supporter au moins un siège arrière muni, comme il se doit, d'une ceinture de sécurité pouvant être raccordée à un pédoncule traversant le plancher dans sa partie centrale.

Toutefois, il n'est pas suffisamment résistant pour assurer la retenue du pédoncule en cas de choc du véhicule automobile car, dans un tel cas, la ceinture de sécurité et, donc, le pédoncule, est soumis à une force de traction très élevée.

Par conséquent, pour retenir le pédoncule en cas de choc, on doit ajouter, sous le plancher, un berceau en acier s'étendant transversalement d'un longeron arrière latéral à l'autre, berceau auquel on arrime le pédoncule.

Ainsi, lors d'un choc du véhicule automobile, le pédoncule est apte à supporter des tractions très élevées sans être arraché du plancher, car le berceau métallique transmet à la caisse du véhicule les efforts de traction exercés par le pédoncule, sans solliciter le plancher.

Le berceau métallique est donc d'une grande utilité.

Toutefois, ce berceau a un poids relativement élevé.

L'invention a notamment pour but de proposer une solution alternative au berceau métallique, permettant de réduire le poids du véhicule, et ce sans réduire les capacités de résistance mécanique aux efforts de traction.

A cet effet, l'invention a pour objet un plancher conforme à la revendication 1.

Grâce à l'invention, le berceau métallique peut être remplacé par le corps creux qui est plus léger.

De façon connue en soi, le moulage par injection d'une résine polymère dans une préforme fibreuse, désigné également « moulage par transfert de résine » (RTM : acronyme anglais pour « Resin Transfer Molding ») consiste à introduire une préforme fibreuse dans un moule et à injecter sous vide et sous faible pression une résine polymère liquide dans le moule de manière à imprégner la préforme fibreuse. La préforme fibreuse ainsi imprégnée de résine est ensuite chauffée pour provoquer la réticulation de la résine, avant de procéder à son démoulage.

Un tel procédé présente notamment l'avantage de permettre une relativement bonne maîtrise de la répartition et de l'orientation des fibres à l'intérieur de la deuxième partie, ce qui permet d'augmenter la rigidité et la résistance à un effort dans des zones particulières de la deuxième partie.

Par ailleurs, le corps creux obtenu en liant les deux parties a pour effet d'augmenter la rigidité de l'ensemble et de tirer profit de la rigidité de la première partie en SMC, laquelle, dans l'état de la technique, n'était pas mise à contribution pour retenir le pédoncule.

Ainsi, les deux parties forment un ensemble qui a une rigidité adaptée pour supporter des efforts de traction aussi élevés que ceux exercés, par exemple, par un pédoncule de raccordement d'une ceinture de sécurité lors d'un choc du véhicule du type crash à grande vitesse selon le règlement communautaire ECE 14.

Au delà du seul pédoncule de ceinture, le plancher selon l'invention est adapté pour retenir tout organe de retenue d'un équipement intérieur du véhicule automobile, comme par exemple ses sièges.

Un aspect intéressant du plancher selon l'invention est qu'en dépit de sa grande rigidité face à un effort de traction exercé vers l'avant dans sa partie centrale, il est capable de se déformer en absorbant de l'énergie en cas de compression selon la direction longitudinale du véhicule. Ainsi, en cas de choc avant, le plancher peut se déformer et limiter ainsi la charge supportée par les passagers arrière.

Par ailleurs, en cas de choc par l'arrière du véhicule, le plancher a la faculté de se ruiner et donc de ne pas se déplacer vers l'avant. En particulier, s'il se trouve en arrière d'un système à carburant, le risque que le corps creux se déplace vers l'avant et endommage ce système est moindre qu'avec le berceau métallique de l'état de la technique.

Selon d'autres caractéristiques optionnelles du plancher selon l'invention, qui peuvent être prises seules ou en combinaison :
- le plancher comporte dans son corps creux, un emplacement de fixation d'au moins un organe de retenue d'un équipement intérieur du véhicule automobile ;
- les première et deuxième parties se rejoignent localement à l'emplacement de fixation ;
- à l'emplacement de fixation, la deuxième partie comprend un logement pour l'organe, dimensionné de manière que l'organe ne dépasse pas dudit logement une fois l'organe de retenue fixé au plancher;
- l'équipement intérieur est un pédoncule d'une ceinture de sécurité ;
- le corps creux a une forme générale oblongue et est destiné à s'étendre en longueur selon une direction transversale du véhicule automobile, entre deux longerons arrière dudit véhicule ;
- le corps creux comprend des bords destinés à s'étendre selon la direction longitudinale du véhicule et est destiné à être rapporté par vissage de ces bords sous les longerons ;
- la deuxième partie a une section de forme générale en U et la première partie est sensiblement plane ;
- la deuxième partie comprend au moins un bord externe de collage sur la première partie, s'étendant selon la direction transversale du véhicule ;
- la première partie comprend une portion centrale et une portion périphérique, la portion centrale comprenant un tissu de fibres de renfort incorporé dans la résine polymère du matériau composite de la première partie ;
- la portion périphérique est agencée en périphérie de la portion centrale et est délimitée par un bord interne de jonction avec la portion centrale et un bord externe de délimitation du contour de la première partie ;
- la portion périphérique est co-moulée sur le bord périphérique de la portion centrale ;
- le plancher est destiné à être disposé à l'intérieur d'une première zone du véhicule automobile s'étendant sous une première rangée de sièges arrière et/ou à l'intérieur d'une deuxième zone s'étendant sous une deuxième rangée de sièges arrière du véhicule automobile ;
- la partie supérieure comporte au moins une nervure de rigidification s'étendant dans une direction transversale du véhicule automobile.

L'invention sera mieux comprise à la lecture de la description qui va suivre, donnée uniquement à titre d'exemple et faite en se référant aux dessins dans lesquels :
- la figure 1 représente une vue en coupe d'un véhicule automobile comprenant un plancher selon l'invention ;
- la figure 2 est une vue en perspective de dessous du plancher de la figure 1 ;
- la figure 3 est une vue en perspective de dessous d'une partie supérieure du plancher représenté sur la figure 2 ;
- la figure 4 est une vue en perspective de dessus de la partie supérieure de la figure 3 ;
- la figure 5 est une vue en perspective de dessous d'une partie inférieure du plancher de la figure 2.

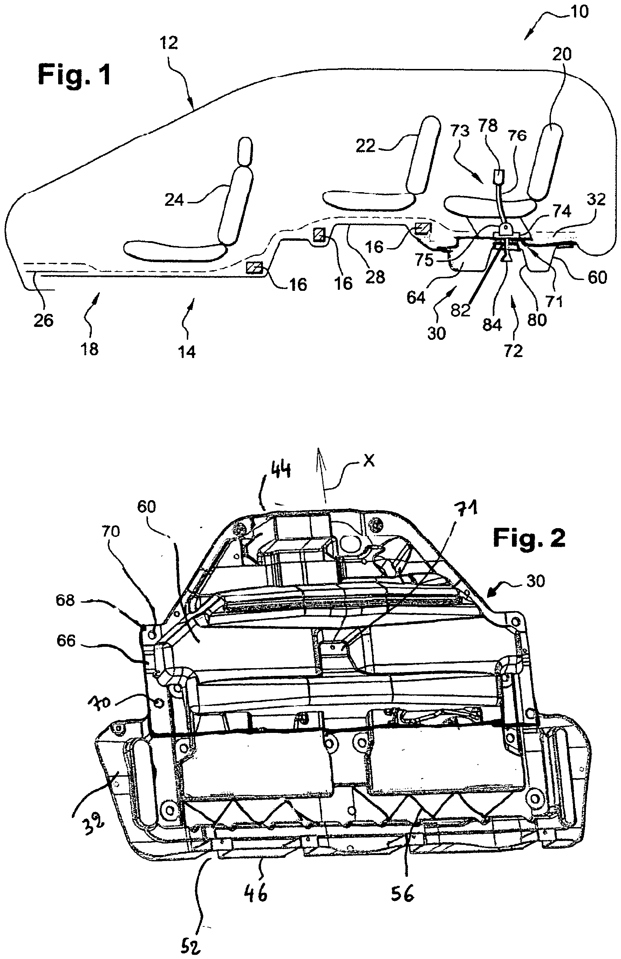

On a représenté sur la figure 1 un véhicule automobile désigné par la référence générale 10. Le véhicule automobile 10 comprend de façon classique une caisse en blanc 12 représentée partiellement sur la figure 1.

De façon connue en soi, on désigne par « caisse en blanc » une structure métallique du véhicule automobile formant une armature rigide destinée à supporter différents organes, notamment les ouvrants, le groupe motopropulseur, les essieux, des pièces de carrosserie en matière plastique, l'habillage intérieur, etc. Cette structure métallique comprend notamment un châssis 14. Le châssis 14 comprend des longerons arrière (non représentés) s'étendant longitudinalement entre des espaces prévus pour une roue avant et une roue arrière du véhicule automobile. Le châssis 14 comprend également des traverses 16 s'étendant perpendiculairement aux longerons arrière.

Le véhicule automobile 10 comporte encore un plancher 18 destiné à supporter divers équipements intérieurs, tels que notamment des sièges arrière 20, centraux 22 et avant 24 du véhicule automobile 10. Dans cet exemple, les sièges arrière 20 sont susceptibles d'adopter une position repliée et une position dépliée.

Le plancher 18 est formé par exemple par au moins un plancher avant 26, un plancher central 28 formant notamment planche à talon d'un occupant éventuel d'un des sièges centraux 22 et un plancher arrière 30.

Plus particulièrement, le plancher arrière 30 est destiné à supporter les sièges arrière 20.

Ce plancher 30 comprend une première partie 32 supérieure (figure 2).

La partie supérieure 32 est réalisée dans un matériau composite comprenant un mélange de fibres de renfort et de résine de polymère de type moulé en feuilles (SMC).

Le mélange peut également comprendre d'autres constituants tels que des charges minérales ainsi que de la poudre issue de recyclage. De préférence, les fibres de renfort sont des fibres de verre et la résine polymère est une résine de type polyester.

Optionnellement, la partie supérieure 32 comprend une portion centrale 34 comprenant un tissu de fibres de renfort incorporé dans la résine polymère du matériau composite de la partie supérieure 32. Le tissu de fibres de renfort ainsi incorporé permet d'une part d'obtenir un effet anti-fissuration isolant l'habitacle d'un incendie provoqué lors d'un choc éventuel et d'autre part d'augmenter la rigidité de cette portion centrale 34.

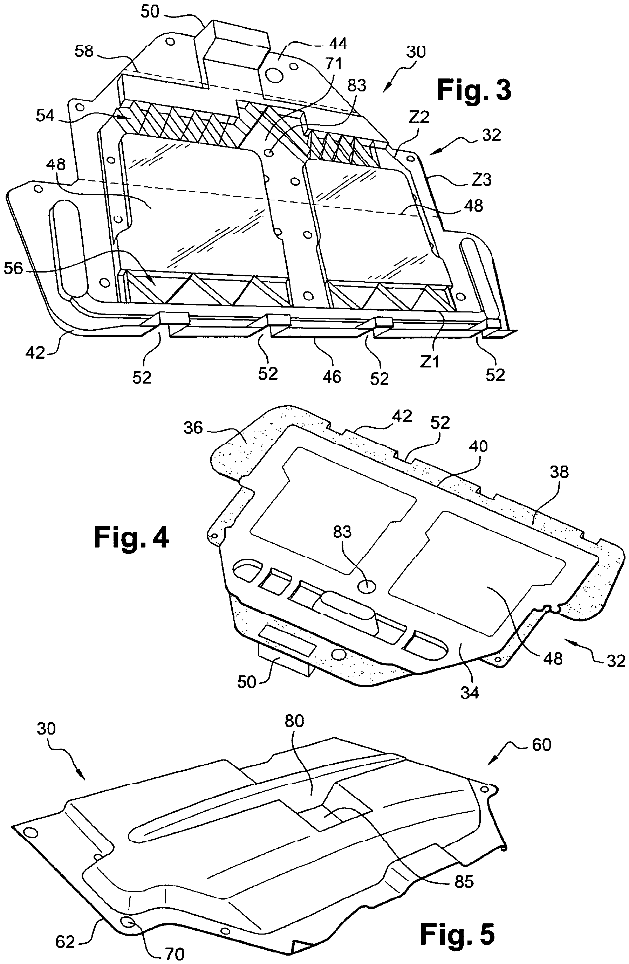

Dans cet exemple, la partie supérieure 32 comprend également une portion périphérique 36 agencée en périphérie de la portion centrale 34. La portion périphérique 36 est délimitée d'une part par un bord interne 38 de jonction avec un bord périphérique 40 de la portion centrale 34 et d'autre part par un bord tombé externe 42 de délimitation du contour de la partie supérieure 32. De préférence, la portion périphérique 36 est co-moulée sur le bord périphérique 40 de la portion centrale 34 (figure 4).

De préférence, dans cet exemple, le matériau composite de la portion centrale 34 comprend un mélange :
- de 33 % de fibres de verre dont 15 % de fibres de verre de longueur 25 mm et 18 % de fibres sous forme du tissu incorporé ;
- de 25 % de résine polyester ; et
- de charges minérales et de divers produits tels qu'une poudre issue de recyclage.

En outre, le matériau composite de la portion périphérique 36 comprend, par exemple, un mélange :
- de 28 % de fibres de verre de longueur 25 mm ;
- de 25 % de résine polyester ; et
- de charges minérales et d'autres produits tels qu'une poudre issue de recyclage.

La présence du tissu de fibres de renfort incorporé dans la résine polymère du matériau composite formant la portion centrale 34 confère à cette portion un effet anti-fissuration supérieur à celle de la portion périphérique 36.

Par ailleurs, du fait que la portion périphérique 36 ne comprend pas de tissu de fibres de renfort, elle est plus ductile et la mise en forme du contour de la partie supérieure 32 est par conséquent facilitée.

La partie supérieure 32 a une surface sensiblement plane et est sensiblement symétrique par rapport à un axe X. Dans l'exemple décrit, la partie supérieure 32 a un contour de forme générale sensiblement trapézoïdale. Ainsi, la partie supérieure 32 comprend un premier côté 44 de petite largeur et un deuxième côté 46 de grande largeur opposé à ce premier côté 44, ces deux côtés 44 et 46 étant sensiblement parallèles.

La partie supérieure 32 est, dans cet exemple, destinée à être agencée dans le véhicule automobile 10, de manière à ce que le sens allant du deuxième côté 46 vers le premier côté 44 corresponde au sens de déplacement du véhicule automobile.

La partie supérieure 32 forme, dans l'exemple décrit, une structure d'accueil de divers équipements du véhicule automobile tels que les sièges arrière 20 du véhicule, un pédoncule 73 de ceinture de sécurité, etc. Ainsi, la partie supérieure 32 comprend deux emplacements 48 destinés à accueillir deux sièges arrière 20 (figure 4). Par ailleurs, la partie supérieure 24 comporte un caisson 50, de forme générale parallélépipédique pour le rangement d'accessoires divers. La partie supérieure 32 comprend également, sur le bord externe tombé 42 du côté de grande largeur 46, des évidements 52 pour l'emboîtement d'une jupe arrière du véhicule (non représentée). La partie supérieure 32 comporte également une cavité 54 de forme générale rectangulaire ménagée et s'étendant en longueur transversalement en bordure des emplacements 48 des sièges arrière 20, entre ces emplacements 48 et le côté de petite largeur 44.

Par ailleurs, afin d'augmenter la rigidité et la résistance de la partie supérieure 32, la partie supérieure 32 comprend au moins une nervure ménagée sur une de ses deux faces, dite face externe, cette face externe étant destinée à être dirigée vers l'extérieur du véhicule automobile, une fois le plancher 30 en place.

Plus précisément, dans cet exemple, la partie supérieure 32 comprend des première 56 et deuxième 58 nervures. Dans cet exemple, la première nervure 56 est agencée en triangle et est destinée à s'étendre transversalement dans une zone Z1 de forme générale rectangulaire située entre le bord tombé externe 42 du côté de grande largeur 46 et les emplacements 48 des sièges arrière 20. La deuxième nervure 58 est agencée en croix et est destinée à s'étendre transversalement dans une zone Z2 située à l'intérieur de la cavité 54 (figure 3).

Le plancher arrière 30 comprend, conformément à l'invention, une deuxième partie 60 inférieure moulée par injection d'une résine polymère dans une préforme fibreuse (RTM). La deuxième partie 60 a une section de forme générale en U. De préférence, la résine polymère est une résine polyester et la préforme fibreuse comprend des fibres de verre.

Conformément à l'invention, la partie supérieure 32 et la partie inférieure 60 sont conformées et liées entre elles de manière à constituer un corps creux 64 (figure 1). De préférence, les deux parties 32 et 60 sont liées entre elles par collage.

A cet effet, la deuxième partie 60 (figures 1, 2 et 5) a une section de forme générale en U et comprend au moins un bord externe 62 de collage sur la partie supérieure 32, ce bord de collage 62 s'étendant selon la direction transversale du véhicule automobile. Dans l'exemple décrit, ce bord externe de collage 62 est formé sur toute la périphérie de la partie inférieure 60. Dans cet exemple, la deuxième partie 60 est destinée à s'étendre dans une zone Z3 couvrant la moitié des emplacements 48 des sièges arrière 20 et la cavité transversale 54 dans laquelle est destinée à s'étendre la deuxième nervure 58.

Le corps creux 64 a une forme générale oblongue et est destiné à s'étendre en longueur selon la direction transversale du véhicule automobile 10, entre deux longerons (non représentés) du véhicule.

Plus précisément, de préférence, le corps creux 64 comprend des bords externes 66 destinés à s'étendre selon la direction longitudinale du véhicule 10. L'ensemble formé par les deux parties 32 et 60 est ainsi rapporté par vissage de ces bords 66 sous les longerons arrière.

A cet effet, dans cet exemple, les bords externes 66 du corps creux 64 comprennent des moyens 68 de fixation comprenant des trous 70 destinés à accueillir chacun une vis. Eventuellement, en variante, les bords externes 66 forment un emplacement pour accueillir un cordon de colle afin de rapporter le plancher 30 par collage sous les longerons.

Par ailleurs, de préférence, le plancher 30 comporte dans son corps creux, un emplacement 71 de fixation d'au moins un organe 72 de retenue d'un équipement intérieur du véhicule automobile 10. En particulier, en référence à la figure 1, les première 32 et deuxième 60 parties se rejoignent localement à l'emplacement de fixation 71, grâce à une forme en relief de la deuxième partie 60 constituant un logement 80 pour l'organe 72, dimensionné de manière que l'organe 72 ne dépasse pas dudit logement 80 une fois l'organe de retenue 72 en place sur le plancher 30. Le logement 80 a une forme générale parallélépipédique et forme une partie saillante à l'intérieur du corps creux 64 conformé pour accueillir une plaque de serrage 82.

Dans cet exemple, l'équipement intérieur est le pédoncule 73 de ceinture de sécurité des sièges arrière 20. En général, le pédoncule de ceinture de sécurité 73 comprend au moins une base 74 destinée à être en contact avec le plancher et un étrier 75 solidaire de la base 74, pour la fixation d'une tige 76 de raccordement à un dispositif 78 classique d'attache de ceinture de sécurité.

L'organe de retenue 72 comprend la plaque 82 de serrage et une vis 84 de raccordement de cette plaque 82 à la base 74 de l'équipement intérieur 73, de manière à ce que les deux parties supérieure 32 et inférieure 60 soient enserrées entre la base 74 du pédoncule de ceinture de sécurité et la plaque de serrage 82.

Dans cet exemple, des premier 83 et deuxième 85 orifices de passage de la vis de raccordement 84 sont ménagés respectivement sur la première partie 32 et sur la deuxième partie 60, à l'intérieur de l'emplacement de fixation 71. Dans cet exemple, ces deux orifices 83 et 85 de passage sont alignés de sorte que la vis de raccordement 84 s'étende de façon rectiligne à travers le plancher 30. Par exemple, les deux orifices 83 et 85 ont des formes générales circulaires et sont concentriques

Dans l'exemple décrit, le plancher arrière 30 de l'invention est destiné à être disposé à l'intérieur d'une première zone du véhicule automobile s'étendant sous une rangée de sièges arrière 20. En variante, le plancher arrière de l'invention 30 peut être disposé à l'intérieur d'une deuxième zone s'étendant sous une rangée de sièges centraux 22 du véhicule automobile 10.

L'invention permet ainsi de réduire le poids du véhicule automobile, tout en procurant au plancher arrière 30 une rigidité suffisante pour permettre la retenue d'un organe tel que le pédoncule 73.

Par ailleurs, le corps creux 64 confère au plancher arrière 30 une grande résistance mécanique tout en tirant profit des propriétés mécaniques de la partie supérieure 32 en SMC.

Bien entendu, on pourra apporter à l'invention de nombreuses modifications sans sortir du cadre de celle-ci.

On peut notamment modifier la disposition et/ou la forme des parties du plancher, ou encore l'agencement du plancher à l'intérieur du véhicule automobile tout en offrant les avantages procurés par l'invention.

## Revendications

1. Plancher (30) pour un véhicule automobile (10), du type comprenant une première partie (32) réalisée dans un matériau composite comprenant un mélange d'au moins des fibres de renfort et d'une résine polymère, et comprenant une deuxième partie (60), les première (32) et deuxième (60) parties étant conformées et liées entre elles de manière à constituer un corps creux (64), **caractérisé en ce que** la deuxième partie (60) est moulée par injection d'une résine polymère dans une préforme fibreuse (RTM).

2. Plancher (30) selon la revendication 1, dans lequel le matériau de la première partie (32) est du type moulé en feuille (SMC).

3. Plancher (30) selon l'une quelconque des revendications 1 et 2, comportant dans son corps creux (64), un emplacement (71) de fixation d'au moins un organe (72) de retenue d'un équipement intérieur (73) du véhicule automobile (10).

4. Plancher (30) selon la revendication 3, dans lequel les première (32) et deuxième (60) parties se rejoignent localement à l'emplacement de fixation (71).

5. Plancher (30) selon la revendication 4, dans lequel, à l'emplacement de fixation (71), la deuxième partie (60) comprend un logement (80) pour l'organe (72), dimensionné de manière que l'organe (72) ne dépasse pas dudit logement (80) une fois l'organe de retenue (72) fixé au plancher (30).

6. Plancher (30) selon l'une quelconque des revendications 3 à 5, dans lequel l'équipement intérieur (73) est un pédoncule d'une ceinture de sécurité.

7. Plancher (30) selon l'une quelconque des revendications 1 à 6, dans lequel le corps creux (64) a une forme générale oblongue et est destiné à s'étendre en longueur selon une direction transversale du véhicule automobile (10), entre deux longerons arrière dudit véhicule (10).

8. Plancher (30) selon la revendication 7, dans lequel le corps creux (64) comprend des bords (66) destinés à s'étendre selon la direction longitudinale du véhicule (10) et est destiné à être rapporté par vissage de ces bords (66) sous les longerons.

9. Plancher (30) selon l'une quelconque des revendications 1 à 8, dans lequel la deuxième partie (60) a une section de forme générale en U et la première partie (32) est sensiblement plane.

10. Plancher (30) selon l'une quelconque des revendications 1 à 9, dans lequel la deuxième partie (60) comprend au moins un bord externe (62) de collage sur la première partie (32), s'étendant selon la direction transversale du véhicule (10).

11. Plancher (30) selon l'une quelconque des revendications 1 à 10, dans lequel la première partie (32) comprend une portion centrale (34) et une portion périphérique (36), la portion centrale (34) comprenant un tissu de fibres de renfort incorporé dans la résine polymère du matériau composite de la première partie (32).

12. Plancher (30) selon la revendication 11, dans lequel la portion périphérique (36) est agencée en périphérie de la portion centrale (34) et est délimitée par un bord interne (38) de jonction avec la portion centrale (34) et un bord externe (42) de délimitation du contour de la première partie (32).

13. Plancher (30) selon la revendication 11 ou 12, dans lequel la portion périphérique (36) est co-moulée sur le bord périphérique (40) de la portion centrale (34).

14. Plancher (30) selon l'une quelconque des revendications 1 à 13, étant destiné à être disposé à l'intérieur d'une première zone du véhicule automobile s'étendant sous une première rangée de sièges arrière et/ou à l'intérieur d'une deuxième zone s'étendant sous une deuxième rangée de sièges arrière (20) du véhicule automobile (10).

15. Plancher (30) selon l'une quelconque des revendications 1 à 14, dans lequel la partie supérieure (32) comporte au moins une nervure de rigidification (56, 58) s'étendant dans une direction transversale du véhicule automobile (10).

## Claims

1. A floor (30) for a motor vehicle (10), the floor being of the type comprising first and second portions (32, 60) the first portion (32) being made of a composite material comprising a mixture at least of reinforcing fibers and a polymer resin, the first and second portions (32, 60) being shaped and connected together so as to constitute a hollow body (64), the floor being **characterized in that** the second portion (60) is injection molded out of a polymer resin in a fiber preform (RTM).

2. A floor (30) according to claim 1, wherein the material of the first portion (32) is of the sheet molded type (SMC).

3. A floor (30) according to claim 1 or claim 2, including a fastening location (71) in its hollow body (64) for fastening at least one member (72) for retaining a piece of interior equipment (73) of the motor vehicle (10).

4. A floor (30) according to claim 3, wherein the first and second portions (32, 60) are united locally at the fastening location (71).

5. A floor (30) according to claim 4, wherein, at the fastening location (71), the second portion (60) includes a housing (80) for the member (72) and dimensioned in such a manner that the member (72) does not project out from said housing (80) once the retaining member (72) has been fastened to the floor (30).

6. A floor (30) according to any one of claims 3 to 5, wherein the piece of interior equipment (73) is a safety-belt stalk.

7. A floor (30) according to any one of claims 1 to 6, wherein the hollow body (64) is generally oblong in shape and is designed to extend lengthwise in a transverse direction of the motor vehicle (10) between two rear side rails of said vehicle (10).

8. A floor (30) according to claim 7, wherein the hollow body (64) has margins (66) designed to extend in the longitudinal direction of the vehicle (10), and is designed to be fitted under the side rails by screw fastening the margins (66).

9. A floor (30) according to any one of claims 1 to 8, wherein the second portion (60) is of generally U-shaped section and the first portion (32) is substantially plane.

10. A floor (30) according to any one of claims 1 to 9, wherein the second portion (60) includes at least one outer margin (62) for adhesively bonding to the first portion (32) and extending in the transverse direction of the vehicle (10).

11. A floor (30) according to any one of claims 1 to 10, wherein the first portion (32) comprises a central region (34) and a peripheral region (36), the central region (34) comprising a fabric of reinforcing fibers incorporated in the polymer resin of the composite material of the first portion (32).

12. A floor (30) according to claim 11, wherein the peripheral region (36) is made at the periphery of the central region (34) and is defined by an internal junction margin (38) for joining with the central portion (34) and an external margin (42) for defining the outline of the first portion (32).

13. A floor (30) according to claim 11 or claim 12, wherein the peripheral region (36) is co-molded on the peripheral margin (40) of the central region (34).

14. A floor (30) according to any one of claims 1 to 13, for placing within a first zone of the motor vehicle that extends under a first row of rear seats and/or within a second zone extending under a second row of rear seats (20) of the motor vehicle (10).

15. A floor (30) according to any one of claims 1 to 14, wherein the top portion (32) includes at least one stiffening rib (56, 58) extending in a transverse direction of the motor vehicle (10).

## Patentansprüche

1. Boden (30) für ein Kraftfahrzeug (10) des Typs, der einen ersten Teil (32) aufweist, der aus einem Verbundwerkstoff hergestellt ist, der ein Gemisch aus mindestens Verstärkungsfasern und einem Polymerharz aufweist, und einen zweiten Teil (60), wobei der erste (32) und der zweite (60) Teil derart ausgebildet und miteinander verbunden sind, dass sie einen Hohlkörper (64) bilden, **dadurch gekennzeichnet, dass** der zweite Teil (60) durch Spritzgießen eines Polymerharzes in eine faserige Vorform (RTM) geformt ist.

2. Boden (30) nach Anspruch 1, bei dem der Werkstoff des ersten Teils (32) vom als Matte geformten Typ (SMC) ist.

3. Boden (30) nach einem der Ansprüche 1 und 2, der in seinem Hohlkörper (64) eine Stelle (71) zum Befestigen mindestens eines Organs (72) zum Zurückhalten einer Innenausstattung (73) des Kraftfahrzeugs (10) aufweist.

4. Boden (30) nach Anspruch 3, bei dem sich der erste (32) und der zweite (60) Teil lokal an der Befestigungsstelle (71) treffen.

5. Boden (30) nach Anspruch 4, bei dem der zweite Teil (60) an der Befestigungsstelle (71) eine Aufnahme (80) für das Organ (72) aufweist, die derart bemessen ist, dass das Organ (72), nachdem das Rückhalteorgan (72) an dem Boden (30) befestigt wurde, nicht aus der Aufnahme (80) übersteht.

6. Boden (30) nach einem der Ansprüche 3 bis 5, bei dem die Innenausstattung (73) ein Gurtschloss eines Sicherheitsgurts ist.

7. Boden (30) nach einem der Ansprüche 1 bis 6, bei dem der Hohlkörper (64) eine allgemein längliche Form hat und dazu bestimmt ist, sich in Längsrichtung entlang einer Querrichtung des Kraftfahrzeugs (10) zwischen zwei hinteren Längsträgern des Fahrzeugs (10) zu erstrecken.

8. Boden (30) nach Anspruch 7, bei dem der Hohlkörper (64) Ränder (66) aufweist, die dazu bestimmt sind, sich entlang der Längsrichtung des Fahrzeugs (10) zu erstrecken und dazu bestimmt sind, durch Schrauben dieser Ränder (66) unter die Längsträger angebaut zu werden.

9. Boden (30) nach einem der Ansprüche 1 bis 8, bei dem der zweite Teil (60) einen allgemeinen U-förmigen Querschnitt hat und der erste Teil (32) im Wesentlichen flach ist.

10. Boden (30) nach einem der Ansprüche 1 bis 9, bei dem der zweite Teil (60) mindestens einen Außenrand (62) zum Kleben an den ersten Teil (32) aufweist, der sich entlang der Querrichtung des Fahrzeugs (10) erstreckt.

11. Boden (30) nach einem der Ansprüche 1 bis 10, bei dem der erste Teil (32) einen zentralen Bereich (34) und einen umfänglichen Bereich (36) aufweist, wobei der zentrale Bereich (34) ein Gewebe aus Verstärkungsfasern eingearbeitet in das Polymerharz des Verbundwerkstoffs des ersten Teils (32) aufweist.

12. Boden (30) nach Anspruch 11, bei dem der umfängliche Bereich (36) am Umfang des zentralen Bereichs (34) angeordnet ist und von einem Innenrand (38) zum Verbinden mit dem zentralen Bereichs (34) und einem Außenrand (42) zum Abgrenzen der Kontur des ersten Teils (32) abgegrenzt ist.

13. Boden (30) nach Anspruch 11 oder 12, bei dem der umfängliche Bereich (36) gemeinsam an dem Umfangsrand (40) des zentralen Teils (34) angeformt ist.

14. Boden (30) nach einem der Ansprüche 1 bis 13, der dazu bestimmt ist, im Inneren eines ersten Bereichs des Kraftfahrzeugs, der sich unter einer ersten Reihe von Rücksitzen erstreckt, angeordnet zu werden, und/oder im Inneren eines zweiten Bereichs, der sich unter einer zweiten Reihe von Rücksitzen (20) des Kraftfahrzeugs (10) erstreckt.

15. Boden (30) nach einem der Ansprüche 1 bis 14, bei dem der obere Teil (32) mindestens eine Versteifungsrippe (56, 58) aufweist, die sich in einer Querrichtung des Kraftfahrzeugs (10) erstreckt.
